# EUROPEAN PATENT APPLICATION

(11) **EP 4 730 595 A1**
(43) Date of publication of application: **22.04.2026**
(21) Application number: 24824992.2
(22) Date of filing: 17.04.2024
(51) Int. Cl.: H02J 7/00, H02J 7/32, H02J 50/30, H02H 7/18, H02H 11/00

(54) **ELECTRONIC SHELF LABEL SYSTEM**

(30) Priority: 19.06.2023 CN 202310725168
(71) Applicant: Hanshow Technology Co., Ltd., Jiaxing, Zhejiang 314031 (CN)
(72) Inventor: WANG, Yanwei, Jiaxing, Zhejiang 314031 (CN); LIANG, Min, Jiaxing, Zhejiang 314031 (CN); LYU, Jie, Jiaxing, Zhejiang 314031 (CN); TIAN, Zhihua, Jiaxing, Zhejiang 314031 (CN); HOU, Shiguo, Jiaxing, Zhejiang 314031 (CN)
(74) Representative: IP TRUST SERVICES
(86) International application number: PCT/CN2024/088246
(87) International publication number: WO 2024/260091

(57) **Abstract**

The present disclosure discloses an electronic shelf label system, relating to the field of shelf labels. The system includes: an energy transducer, a transducer reverse protection circuit, a primary battery, a primary battery reverse protection circuit, and an electronic shelf label main body module. The electronic shelf label main body module includes a MCU. The MCU sends a first control signal to the primary battery reverse protection circuit to control power supply from the primary battery. The energy transducer converts at least one type of energy into electrical energy to supply power to the electronic shelf label main body module. The transducer reverse protection circuit prevents current backflow from the electronic shelf label system to the energy transducer. The primary battery supplies power to the electronic shelf label main body module according to a second control signal. The primary battery reverse protection circuit prevents charging of the primary battery by the transducer or other energy sources. The present disclosure provides, for electronic shelf labels, a long-life and flexibly deployable multi-power supply system in which a plurality of clean energy sources are complementary to a primary battery.

## Description

### RELATED APPLICATION

The present application claims priority to Chinese Patent Application No. 202310725168.8 filed on June 19, 2023, which is hereby incorporated by reference in its entirety.

### TECHNICAL FIELD

The present disclosure relates to the technical field of shelf labels, in particular to an electronic shelf label system.

### BACKGROUND

This section is intended to provide background or context for the embodiments of the present disclosure described in the claims. The descriptions here are not admitted to be prior art just because they are included in this section.

Electronic shelf labels typically rely on primary batteries (such as primary lithium-manganese coin cells, primary lithium-manganese pouch cells, or primary lithium-thionyl chloride batteries, or alternatively), DC (Direct Current) power supply, for energy to support operations such as screen price updating (price change on the screen), indicator flashing and wireless communication. Since an electronic shelf label has a limited physical size and is equipped with a primary battery, the battery capacity is constrained. For an electronic shelf label, in addition to the actual operations like screen refreshing, indicator flashing and data communication, the standby current of the internal components of the shelf label, the standby current of the communication system, and the self-discharge of the primary battery itself all contribute to a capacity loss of the primary battery. As a result, the service life of the primary battery of the electronic shelf label will be severely limited, requiring a plurality of times of battery replacements during the ESLs' service life, otherwise failures in the screen refreshing function of the electronic shelf label may occur, leading to phenomena such as incorrect information display and even causing serious consequences such as price fraud or customer complaints. Meanwhile, since battery replacements are carried out by the party that uses the electronic shelf labels, additional manpower, cost input, etc. are increased. In the solution where a DC power source is introduced for power supply, for electronic shelf labels with high requirements for attributes such as portability and flexible deployment, the deployment of DC power source leads costs high and is cumbersome, lacking overall flexibility.

### SUMMARY

Embodiments of the present disclosure provide an electronic shelf label system, for providing a long-life multi-power supply system integrating various clean energy sources with a primary battery for complementary power supply to the electronic shelf label main body. The system includes: an energy transducer, a transducer reverse protection circuit, a primary battery, a primary battery reverse protection circuit, and an electronic shelf label main body module; the energy transducer is respectively electrically connected to the electronic shelf label main body module and the primary battery via the transducer reverse protection circuit; the primary battery is electrically connected to the electronic shelf label main body module via the primary battery reverse protection circuit; the electronic shelf label main body module includes a microcontroller unit (MCU);

the MCU is configured to send a first control signal to the primary battery reverse protection circuit according to an operation state of the electronic shelf label main body module, to control power supply from the primary battery;

the energy transducer is configured to convert at least one type of energy in the environment into electrical energy to supply power to the electronic shelf label main body module;

the transducer reverse protection circuit is configured to prevent current backflow from the electronic shelf label system to the energy transducer;
the primary battery is configured to supply power to the electronic shelf label main body module according to a second control signal; and
the primary battery reverse protection circuit is configured to prevent the primary battery from being charged by the energy transducer or other energy sources.

In an embodiment, the electronic shelf label system further includes: an energy intensity detection circuit; the energy intensity detection circuit is electrically connected to the electronic shelf label main body module;
the energy intensity detection circuit is configured to perform energy intensity detection on at least one type of energy in the environment, and send a second control signal to the MCU according to a detection result;
the MCU is further configured to send the first control signal to the primary battery reverse protection circuit according to the second control signal, to control power supply from the primary battery.

In an embodiment, the operation state of the electronic shelf label main body module includes: a sleep standby state, a scheduled operation state and a wireless data communication state.

In an embodiment, the electronic shelf label system further includes: an energy storage device, and the energy storage device is electrically connected to the energy transducer via the transducer reverse protection circuit, and is electrically connected to the electronic shelf label main body module; the energy storage device is configured to receive and store surplus energy, and to supply power to the electronic shelf label main body module, and the surplus energy is determined by power supplied by the energy transducer and power consumed by the electronic shelf label main module.

In an embodiment, the energy storage device is also electrically connected to the primary battery via the primary battery reverse protection circuit, and the primary battery is also configured to perform trickle charging the energy storage device when the energy stored in the energy storage device falls below a preset threshold.

In an embodiment, the energy storage device includes one or any combination of a capacitor, a battery capacitor, a secondary battery and a super-capacitor.

In an embodiment, if the energy storage device is a secondary battery, the energy storage device further includes an external power supply interface, and the external power supply interface is configured to connect external electrical energy when the secondary battery is over-discharged, to activate the secondary battery.

In an embodiment, the electronic shelf label system further includes: a first voltage and current limiter, and a second voltage and current limiter;
the transducer reverse protection circuit is respectively electrically connected to the energy storage device, the primary battery and the second voltage and current limiter via the first voltage and current limiter; the energy storage device is electrically connected to the electronic shelf label main body module via the second voltage and current limiter; the first voltage and current limiter and the second voltage and current limiter are configured to perform current limiting or voltage conversion on the circuit.

In an embodiment, the at least one type of energy in the environment includes one or any combination of light energy, wireless energy, electromagnetic energy, mechanical energy and thermal energy.

In an embodiment, the energy intensity detection circuit is specifically configured to:
perform energy intensity detection on the at least one type of energy in the environment, and send, if the detected energy intensity is lower than a preset threshold, a second control signal to the MCU.

In an embodiment, the energy transducer includes one or any combination of a photoelectrical energy converter, a wireless energy converter, an electromagnetic energy converter, a mechanical energy converter and a thermal energy converter.

In an embodiment, the electronic shelf label main body module includes a controller electrically connected to the transducer reverse protection circuit, and a display and a wireless communication module respectively electrically connected to the controller; the wireless communication module is configured to receive display information and send the display information to the controller, the controller is configured to generate a control instruction according to the display information and send the control instruction to the display, the display is configured to display a price according to the control instruction, and the wireless communication module includes an near field communication (NFC) module and/or an radio frequency (RF) communication module.

In embodiments of the present disclosure, the electronic shelf label system includes an energy transducer, a transducer reverse protection circuit, a primary battery, a primary battery reverse protection circuit, and an electronic shelf label main body module. To be specific, the energy transducer is respectively electrically connected to the electronic shelf label main body module and the primary battery via the transducer reverse protection circuit; the primary battery is electrically connected to the electronic shelf label main body module via the primary battery reverse protection circuit; the electronic shelf label main body module includes a microcontroller unit (MCU); the MCU is configured to send a first control signal to the primary battery reverse protection circuit according to an operation state of the electronic shelf label main body module, to control power supply from the primary battery; the energy transducer is configured to convert at least one type of energy in the environment into electrical energy to supply power to the electronic shelf label main body module; the transducer reverse protection circuit is configured to prevent current backflow from the electronic shelf label system to the energy transducer; the primary battery is configured to supply power to the electronic shelf label main body module according to the first control signal; the primary battery reverse protection circuit is configured to prevent the primary battery from being charged by the energy transducer or other energy sources. Compared with the prior art systems in which a primary battery is used alone or a DC power source is introduced for power supply, the electronic shelf label system of the present disclosure can provide a long-life multi-power supply system integrating various clean energy sources with a primary battery for complementary power supply to the electronic shelf label main body module.

### BRIEF DESCRIPTION OF THE DRAWINGS

In order to more clearly illustrate the technical solutions in the embodiments of the present disclosure or in the prior art, the drawings to be used in the description of the embodiments or in the prior art will be briefly introduced below. Obviously, the drawings described below are only some embodiments of the present disclosure, and for persons ordinarily skilled in the art, other figures may also be obtained based on these drawings without paying inventive effort. In the drawings:
FIG. 1 is a schematic diagram of the electronic shelf label system according to an embodiment of the present disclosure;
FIG. 2 is a schematic diagram of a specific example of the electronic shelf label system according to an embodiment of the present disclosure;
FIG. 3 is a schematic diagram of a specific example of the electronic shelf label system according to another embodiment of the present disclosure;
FIG. 4 is a schematic diagram of a specific example of the electronic shelf label system according to another embodiment of the present disclosure;
FIG. 5 is a schematic diagram of a specific example of the electronic shelf label system according to another embodiment of the present disclosure;
FIG. 6 is a schematic diagram of micro-energy according to an embodiment of the present disclosure;
FIG. 7 is a schematic diagram of an energy transducer according to an embodiment of the present disclosure.

### DESCRIPTION OF THE EMBODIMENTS

Clear and comprehensive descriptions of the technical solutions in the embodiments of the present disclosure will be given below with reference to the drawings in the embodiments of the present disclosure. Obviously, the embodiments described here are only part of, rather than all of the embodiments of the present disclosure. Based on the embodiments of the present disclosure, all the other embodiments obtained by persons ordinarily skilled in the art without paying inventive effort shall fall within the scope of protection of the present disclosure.

To make the object, technical solutions and advantages of the present disclosure clearer, further detailed illustration of the embodiments of the present disclosure will be given below with reference to the drawings. Here, the embodiments of the present disclosure and illustration thereof are used for explaining the present disclosure, but not for limiting the present disclosure.

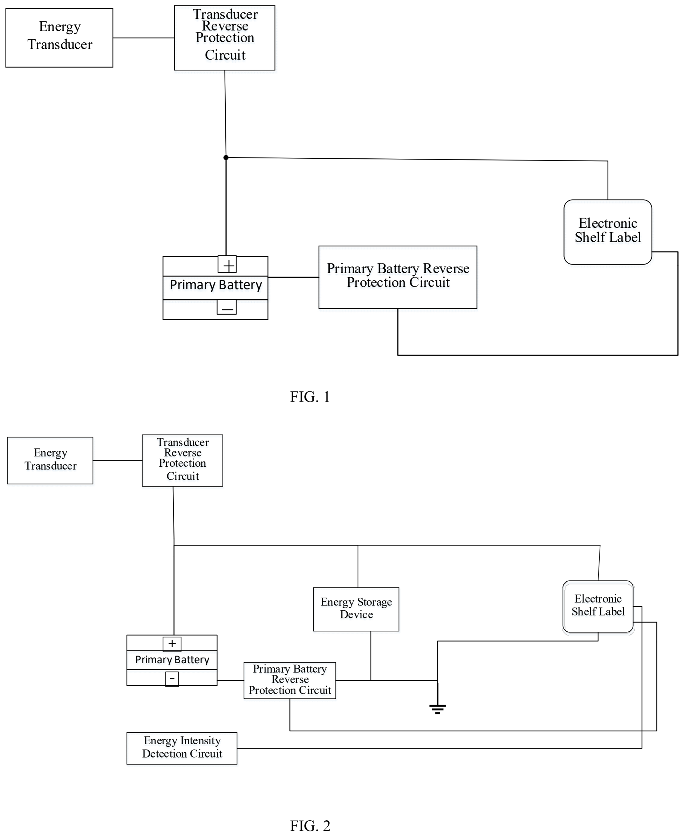

FIG. 1 is a schematic diagram of the electronic shelf label system according to an embodiment of the present disclosure. As shown in FIG. 1, in an embodiment, the present disclosure discloses an electronic shelf label system, including:
an energy transducer, a transducer reverse protection circuit, a primary battery, a primary battery reverse protection circuit, and an electronic shelf label main body module; and the energy transducer is respectively electrically connected to the electronic shelf label main body module and the primary battery via the transducer reverse protection circuit; the primary battery is electrically connected to the electronic shelf label main body module via the primary battery reverse protection circuit; the electronic shelf label main body module includes a Microcontroller Unit (MCU);
the MCU is configured to send a first control signal to the primary battery reverse protection circuit according to an operation state of the electronic shelf label main body module, to control power supply from the primary battery;
the energy transducer is configured to convert at least one type of energy in the environment into electrical energy to supply power to the electronic shelf label main body module;
the transducer reverse protection circuit is configured to prevent current backflow from the electronic shelf label system to the energy transducer; and
the primary battery is configured to supply power to the electronic shelf label main body module according to the first control signal.

In an embodiment, the at least one type of energy in the environment includes one or any combination of light energy, wireless energy, electromagnetic energy, mechanical energy and thermal energy.

In an embodiment, the primary battery is one of the main power sources for the electronic shelf label main body module. In the electronic shelf label system, when the electronic shelf label main body module is in a standby state and micro-energy sources are available, this power supply (primary battery, e.g., backup primary battery in the electronic shelf label) substantially has no power output. However, when the electronic shelf label main body module performs operations such as screen refreshing, continuous communication, NFC (Near Field Communication) communication, etc., which require a continuous high current output from the power supply, this battery (i.e., primary battery, e.g., a backup primary battery in the electronic shelf label) supplements or takes over from the energy storage device to provide a high-current output.

In an embodiment, the energy transducer (Various Transducers) includes a photoelectrical energy converter, a wireless energy converter, a mechanical energy converter, or a thermal energy converter, and the like, which is configured to collect various forms of micro-energy from the front end and convert them into electrical energy. The electrical energy is then output, after undergoing processes such as voltage transformation via a power management module, to a terminal device such as the energy storage device or the electronic shelf label main body module, thereby providing the electronic shelf label body module with various micro-energy sources.

In an embodiment, the transducer reverse protection circuit can prevent current backflow from the energy storage device or the primary battery to the energy transducer, and it may include, for example, a device with a reverse cut-off function or a switching device, such as a diode or an MOS (Metal-Oxide-Semiconductor Field-Effect Transistor) transistor.

In an embodiment, the primary battery reverse protection circuit can prevent the converted micro-energy current from flowing back into the primary battery, and it may include, for example, a device with a reverse cut-off function or a switching device, such as a diode or an MOS transistor, and may be implemented with either a program-controlled or a non-program-controlled operation mode.

FIG. 2 is a schematic diagram of a specific example of the electronic shelf label system according to an embodiment of the present disclosure. As shown in FIG. 2, in an embodiment, the electronic shelf label system further includes: an energy storage device, and the energy storage device is electrically connected to the energy transducer via the transducer reverse protection circuit, and is electrically connected to the electronic shelf label main body module; the energy storage device is configured to receive and store surplus energy, and to supply power to the electronic shelf label main body module; and the surplus energy is determined by power supplied by the energy transducer and power consumed by the electronic shelf label main module.

In an embodiment, the energy storage device is also electrically connected to the primary battery via the primary battery reverse protection circuit, and the primary battery is also configured to perform trickle charging on the energy storage device when the energy stored in the energy storage device falls below a preset threshold. After conversion of various types of micro-energy into electrical energy, when supplying power to a terminal device such as the electronic shelf label main body module, if there is an energy surplus, the energy storage device realizes storage of energy, that is, the energy transducer converts micro-energy into electrical energy to supply a standby current to the electronic shelf label main body module and charge the energy storage device. At the point when the electronic shelf label main body module requires power consumption and the power supply from the energy transducer is insufficient, the energy storage device can realize power supply or supplementary power supply to the load device. When the energy supply from the energy storage device is insufficient, an automatic switch to using the primary battery to charge the energy storage device or using the primary battery to perform power output is made; and after the storage device is fully charged, the charging current is automatically reduced and charging cut-off is achieved. Alternatively, the energy transducer, the energy storage device and the primary battery may jointly supply power to the electronic shelf label body module with, a priority order for power supply being, for example, the energy transducer, the energy storage device and then the primary battery.

In an embodiment, the energy storage device includes one or any combination of a capacitor, a battery capacitor, a secondary battery and a super-capacitor.

In this embodiment, if the energy storage device is a secondary battery, the energy storage device further includes an external power supply interface, and the external power supply interface is configured to connect external electrical energy when the secondary battery is over-discharged, to activate the secondary battery. If a secondary battery is adopted as the energy storage device, when the battery enters an extreme state of being fully depleted and over-discharged, the secondary battery needs to be reactivated. Methods for activating the secondary battery of the electronic shelf label main body module include, but are not limited to: activation through an external DC power supply, activation through near-field electromagnetic induction of the ESL (Electronic shelf label) main body module (one of the radio wave activation methods), activation through a strong radio wave signal received by the ESL main body module, activation through a large current under intense ambient light conditions.

In an embodiment, the electronic shelf label system further includes: an energy intensity detection circuit. As shown in FIG. 2, the energy intensity detection circuit is electrically connected to the electronic shelf label main body module; the energy intensity detection module is configured to perform energy intensity detection on at least one type of energy in the environment, and send a second control signal to the MCU according to a detection result; the MCU is further configured to send the first control signal to the primary battery reverse protection circuit according to the second control signal, to control power supply from the primary battery.

In an embodiment, the energy intensity detection circuit is specifically configured to: performing energy intensity detection on at least one type of energy in the environment, and if the detected energy intensity is lower than a preset threshold, send the first control signal to the MCU. The preset threshold may be preset through a hardware circuit, and may also be assigned to the electronic shelf label main body module by a background system of the electronic shelf label main body module, and then the MCU of the electronic shelf label main body module performs sampling and judgment to determine whether the energy intensity is lower than the preset threshold. To be specific, the energy intensity detection circuit includes a micro-energy sampling and conversion circuit, which is configured to perform sampling of the environmental energy and conversion of it through an analog-to-digital circuit to obtain a sampled digital signal. The sampled digital signal is transmitted to the electronic shelf label main body module, where the MCU of the electronic shelf label body module performs judgment to determine whether the energy intensity is lower than the preset threshold. The energy intensity detection circuit may include a plurality of energy sensor modules or devices, namely, sensors for micro-energy intensity detection, to realize intensity detection on micro-energy. Different types of micro-energy require different types of sensors to detection. For example, photosensitive devices such as photoresistors may be selected for illuminance detection.

In an embodiment, the operation state of the electronic shelf label main body module includes: a sleep standby state (e.g., a deep-sleep standby state in which only the basic circuits such as the clock are on standby), a scheduled operation state, and a wireless data communication state. The operation state of the electronic shelf label main body module may specifically also include a sleep standby state (including radio frequency sending and reception pulses), a timed-triggered operation state of the shelf label itself, a wireless data communication state, a task or timed task issued by an upper-level system (including screen refreshing and display and indicator flashing), and the like. By sending the second control signal to the primary battery reverse protection circuit, the power supply switching can be performed.

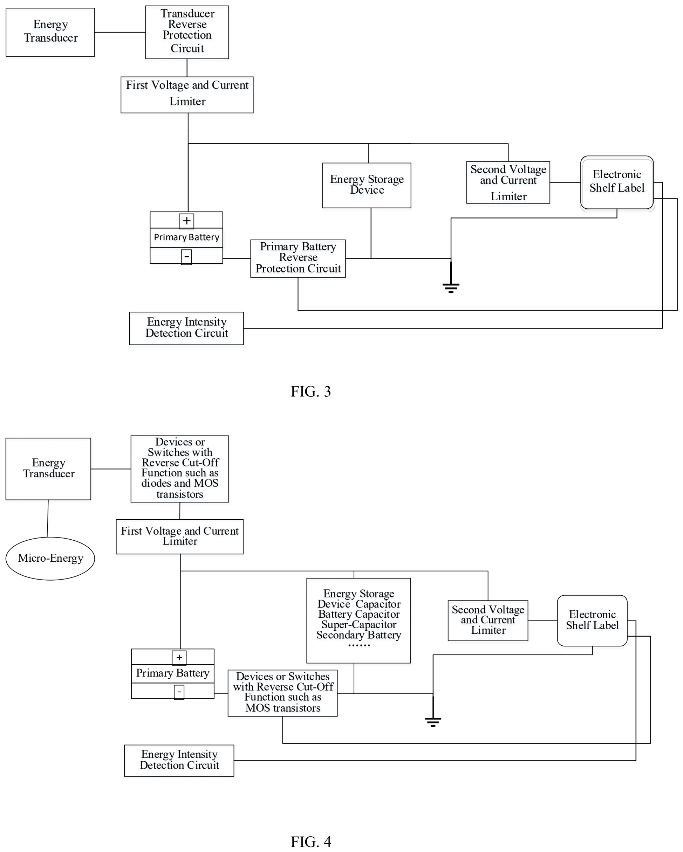

FIG. 3 is a schematic diagram of a specific example of the electronic shelf label system according to an embodiment of the present disclosure. As shown in FIG. 3, in an embodiment, the electronic shelf label system further includes: a first voltage and current limiter, and a second voltage and current limiter; the transducer reverse protection circuit is respectively electrically connected to the energy storage device, the primary battery and the second voltage and current limiter via the first voltage and current limiter; the energy storage device is electrically connected to the electronic shelf label main body module via the second voltage and current limiter; the first voltage and current limiter and the second voltage and current limiter are configured to perform current limiting or voltage conversion on the circuit. The first voltage and current limiter and the second voltage and current limiter are aimed at current limitation or voltage conversion on circuits. For example, they may respectively be a device such as a resistance and a Low Dropout Regulator (LDO). The energy transducer converts micro-energy into electrical energy, and the electrical energy is then output through a power supply regulation circuit such as the first voltage and current limiter; the second voltage and current limiter is disposed the connecting path between the electronic shelf label main body module and the first voltage and current limiter and the energy storage device, in order to be used for current limitation or voltage conversion on the circuits.

In this embodiment, the first voltage and current limiter and the second voltage and current limiter may be selected according to the specific circuit design.

In an embodiment, the power supply management for the electronic shelf label main body module may be: the electronic shelf label main body module is in priority powered by the energy transducer, and after the energy transducer supplies electrical energy to the electronic shelf label main body module, the surplus energy is stored in the energy storage device; when the energy supplied by the energy transducer is continuously consumed and the energy harvested at the front end is insufficient to meet the energy consumption of the electronic shelf label main body module, an automatic switch to supplying power by the energy storage device or by the energy storage device and the energy transducer in combination is made. The energy storage device is replenished after various forms of micro-energy at the front end are harvested and converted and consumed by the electronic shelf label main body module (for example, it may be that the energy remained after the various forms of micro-energy harvested from the front end are consumed by the electronic shelf label main body module is supplied to the energy storage device). When the energy transducer and the energy storage device are insufficient to meet the energy consumption of the electronic shelf label main body module, an automatic switch to a mode of directly supplying power by the primary battery is made in order to supply power to loads such as the electronic shelf label main body module, and at the same time the primary battery performs trickle charging the energy storage device. Such automatic switching may be achieved by the following steps, to be specific, the energy intensity detection circuit detects the external micro-energy environment, and sends the second control signal to the MCU; and the MCU sends the first control signal to the primary battery reverse protection circuit to control the power supply switching, according to the second control signal and/or the self-detected operation state of the electronic shelf label main body module, including a sleep standby state (including radio frequency sending and reception pulses), a timed-triggered operation state of the shelf label itself, a wireless data communication state, a task or timed task issued by an upper-level system (including screen refreshing and display, and indicator flashing), and the like.

In this embodiment, the power supply management may be achieved through electrical parameter matching among various electronic components, supplemented by simple electronic components such as diodes, capacitors, and MOS transistors, as well as logic control via an MCU, without involvement of complex dedicated power supply management components or devices.

In an embodiment, the control of reverse charging protection for the primary battery may be: after the various types of micro-energy at the front end are harvested and converted into electrical energy, while charging the energy storage device, the reverse charging protection circuit for the primary battery is kept in a cut-off state using a control circuit, thereby preventing the converted electrical energy from reversely charging the primary battery; when the reverse charging protection circuit for the primary battery is in the cut-off state, the primary battery may still discharge in the forward direction through the primary battery reverse protection circuit, that is, this reverse charging protection only prevents the primary battery from being reverse charged but does not cut off the power output from the primary battery (the cut-off state only has a minor effect on the output voltage amplitude); the state control of the reverse charging protection circuit for the primary battery is achieved by the MCU inside the electronic shelf label main body module or by other dedicated circuits.

In an embodiment, the energy transducer includes one or any combination of a photoelectrical energy converter, a wireless energy converter, an electromagnetic energy converter, a mechanical energy converter and a thermal energy converter.

In an embodiment, the electronic shelf label main body module includes, but is not limited to including a communication module, a display module, a processor, a multi-color LED (Light Emitting Diode), an NFC module, and an RFID (Radio Frequency Identification) module, etc. The electronic shelf label main body module may, for example, further includes a controller electrically connected to the transducer reverse protection circuit, and a display and a wireless communication module respectively electrically connected to the controller; the wireless communication module is configured to receive display information and send the display information to the controller, the controller is configured to generate a control instruction according to the display information and send the control instruction to the display, the display is configured to display a price according to the control instruction, and the wireless communication module includes an NFC communication module and/or an RF (Radio Frequency) communication module.

In an embodiment, the devices or circuits for energy harvesting, storage and conversion may operate without a complex dedicated charge/discharge management device. By matching the electrical parameters among the primary battery, the energy transducer, and the energy storage device, the electrical connections among the harvested micro-energy output, the primary battery output, and the energy storage device are defined as direct connections. Supplemented by simple electronic components such as diodes, capacitors, and MOS transistors, together with logic control from the ESL MCU, this achieves low-cost and real-time energy harvesting, storage, and conversion.

In an embodiment, in the case where there is an energy source that meets certain operation requirements, the energy transducer, the primary battery, the energy intensity detection circuit and the energy storage device may each serve only as an optional separate accessory for the electronic shelf label main body module and be used in combination with the electronic shelf label main body module. That is to say, the energy transducer, the primary battery, the energy intensity detection circuit and the energy storage device may be independent of the electronic shelf label system. The electronic shelf label system may include only the electronic shelf label main body module, and may also include both the electronic shelf label main body module and the energy transducer, and may also include e both the electronic shelf label main body module and the first battery, and may also include both the electronic shelf main body module and the energy storage device, and may also include the electronic shelf main body module and any combination of the primary battery, the energy intensity detection circuit and the energy storage device. The transducer reverse protection circuit and the primary battery reverse protection circuit, which respectively correspond to the energy transducer and the primary battery, may also serve as optional separate accessories for the electronic shelf label main body module. The first voltage and current limiter and the second voltage and current limiter may also serve as optional separate accessories for the electronic shelf label main body module.

FIG. 4 is a schematic diagram of a specific example of the electronic shelf label system according to an embodiment of the present disclosure. As shown in FIG. 4, the electronic shelf label system may be a multi-power supply system in which a circuit for harvesting and converting micro-energy such as light energy, wireless energy, mechanical energy, thermal energy, etc. is integrated to the electronic shelf label main body module to form a complementary configuration with the primary battery.

In an embodiment, the clean energy transducer device (energy transducer) may be deployed as follows: light energy harvesting: a solar cell may be designed on the surface or inside the electronic shelf label main body module; wireless energy: harvesting wireless energy may be accomplished through wireless or electromagnetic energy harvesting antenna and circuit configured in the electronic shelf label main body module; mechanical energy: harvesting mechanical energy may be accomplished through a vibration or sound energy harvesting and conversion module configured in the electronic shelf label main body module; and thermal energy: harvesting thermal energy may be accomplished through a thermal energy harvesting and conversion module configured in the electronic shelf label main body module.

In an embodiment, for different types of energy transducer devices, the output end of the energy transducer may be equipped with a corresponding signal adaptation circuit or device to realize various ways of energy harvesting and energy conversion.

In an embodiment, the energy such as light energy, wireless energy, mechanical energy and thermal energy, after being transduced by the corresponding various types of energy transducers, may be converted by a linear or nonlinear conversion circuit into a power source adapted to the load such as the energy storage device or the electronic shelf label main body module.

In an embodiment, the various types of energies are harvested and transduced, pass through the linear or nonlinear conversion circuit, and undergo current limitation or voltage limitation (or voltage increase, etc.) using, for example, an optional resistance or a dedicated chip (e.g., an LDO (low dropout regulator)), and are then output to the electronic shelf label main body module or the energy storage device.

In an embodiment, the devices or circuits for energy harvesting, storage and conversion are managed and controlled by matching the electrical parameters among a primary battery, a micro-energy conversion device, and an energy storage device, and by defining the electrical connections between the output of the harvested micro-energy, the primary battery output and the energy storage device as direct connections, with the aid of simple electronic components such as diodes, capacitors and MOS transistors and the logic of the ESL MCU.

In an embodiment, for the primary battery, a dedicated reverse charging protection circuit may be configured.

In an embodiment, the energy storage device may be various types of capacitors, second batteries, battery capacitors, etc.

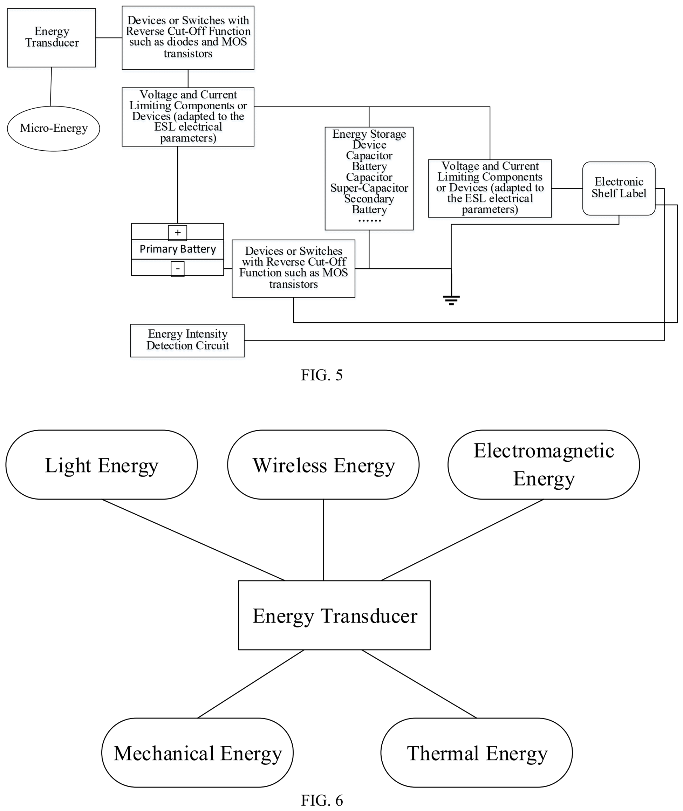

FIG. 5 is a schematic diagram of a specific example of the electronic shelf label system according to an embodiment of the present disclosure. As shown in FIG. 5, the circuit for harvesting and converting micro-energy such as light energy, wireless energy, mechanical energy, thermal energy, etc. is used as an accessory for the electronic shelf label main body module, or as a shared accessory for a plurality of electronic shelf label main body modules, forming a multi-power supply system complementary to the primary battery.

In an embodiment, the harvesting and conversion modules, i.e. converters, for the various types of energy are used as independent accessories for the electronic shelf label main body module.

In an embodiment, the energy harvesting and conversion circuit and converter may also serve as a unified accessory, and terminals such as a plurality of electronic shelf label main body modules share this accessory device.

In an embodiment, the micro-energy transducer device deployment forms are as follows: light energy: a solar cell may be designed on the surface of an accessory for the electronic shelf label main body module or in an internal component of the electronic shelf label main body module; wireless energy: harvesting wireless energy may be accomplished through wireless or electromagnetic energy harvesting antenna and circuit configured in an accessory of the electronic shelf label main body module; mechanical energy: harvesting mechanical energy may be accomplished through a vibration or sound energy harvesting and conversion module configured in an accessory of the electronic shelf label main body module; and thermal energy: harvesting thermal energy may be accomplished through a thermal energy harvesting and conversion module configured in an accessory of the electronic shelf label main body module.

In an embodiment, for different types of energy transducers, the output end of the energy transducer may be equipped with a corresponding signal adaptation circuit or device to realize various ways of energy harvesting and energy conversion.

In an embodiment, the energy such as light energy, wireless energy, mechanical energy, thermal energy, etc., after being transduced by the corresponding various types of energy transducers, may be converted by a linear or nonlinear conversion circuit into a power source adapted to the load such as the energy storage device or the electronic shelf label main body module.

In an embodiment, the devices or circuits for micro-energy harvesting management, storage and conversion are managed and controlled by matching electrical parameters among the primary battery, the micro-energy conversion device and the energy storage device, and by defining the electrical connections between the output of the harvested micro-energy, the primary battery output and the energy storage device as direct connections, with the aid of simple electronic components such as diodes, capacitors and MOS transistors and the logic of the ESL MCU.

In an embodiment, the various types of energy are harvested and transduced, pass through the linear or nonlinear conversion circuit, and undergo current limitation or voltage limitation (or voltage increase, etc.) using, for example, an optional resistance or a dedicated chip (e.g., LDO, DC/DC), and are then output to the electronic shelf label main body module or the energy storage device.

In an embodiment, for the primary battery, the electronic shelf label main body module may be provided with a dedicated reverse charging protection circuit.

In an embodiment, the energy storage device may be various types of capacitors, second batteries, battery capacitors, etc.

In an embodiment, in certain scenarios, the micro-energy input can meet the service power consumption of the electronic shelf label main body module, and due to the presence of the energy storage device, in such cases the primary battery may serve as an accessory for multi-system power supply and be optionally configured according to the product deployment environment (that is, it may be a non-standard accessory).

In an embodiment, the energy intensity detection circuit device for various types of micro-energy may, for example, also serve as a control signal for the power supply circuit, etc., and may also have its signals sampled by the MCU, as a data source for the shelf label to control the power supply circuit or the shelf label circuit.

FIG. 6 is a schematic diagram of the micro-energy according to an embodiment of the present disclosure. As shown in FIG. 6, in an embodiment, the at least one type of energy in the environment includes one or any combination of light energy, wireless energy, electromagnetic energy, mechanical energy and thermal energy. The electronic shelf label system realizes multi-source power supply through the complementary use of various types of clean energy and the primary battery. The green energies include, but are not limited to light energy, wireless energy, near-field coupling field, mechanical vibration, thermal energy, etc. A light source, especially weak indoor light, may be used as a clean energy source, or mechanical vibration may be used as a clean energy source, or radio waves may be used as a clean energy source, or heat may be used as a clean energy source. The harvesting and conversion of the energy are realized through the energy transducer, and the storage of the converted electrical energy and the charging and discharging control, etc. are realized with stable and reliable simple circuits (without a dedicated charging management circuit or module), and finally the real-time automatic switching control of power output between the above-mentioned clean energy source and the primary battery is realized.

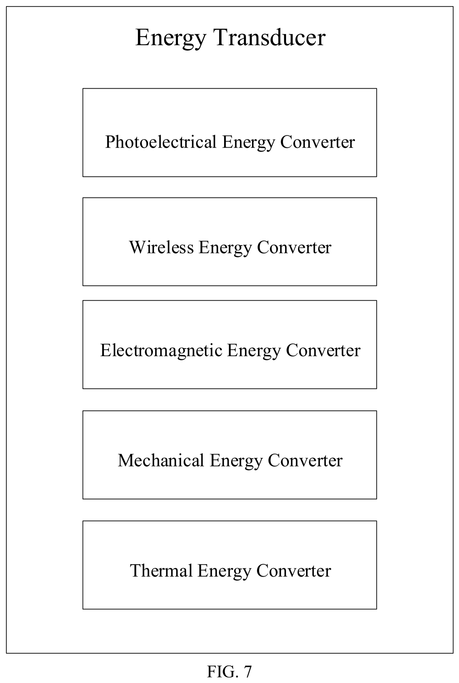

FIG. 7 is a schematic diagram of the energy transducer according to an embodiment of the present disclosure. As shown in FIG. 7, in an embodiment, the energy transducer includes one or any combination of a photoelectrical energy converter, a wireless energy converter, an electromagnetic energy converter, a mechanical energy converter and a thermal energy converter.

In an embodiment of the present disclosure, the electronic shelf label system includes an energy transducer, a transducer reverse protection circuit, a primary battery, a primary battery reverse protection circuit, and an electronic shelf label main body module. To be specific, the energy transducer is respectively electrically connected to the electronic shelf label main body module and the primary battery via the transducer reverse protection circuit; the primary battery is electrically connected to the electronic shelf label main body module via the primary battery reverse protection circuit; the electronic shelf label main body module includes a microcontroller unit (MCU); the MCU is configured to send a first control signal to the primary battery reverse protection circuit according to an operation state of the electronic shelf label main body module, to control power supply from the primary battery; the energy transducer is configured to convert at least one type of energy in the environment into electrical energy to supply power to the electronic shelf label main body module; the transducer reverse protection circuit is configured to prevent current backflow from the electronic shelf label system to the transducer; the primary battery is configured to supply power to the electronic shelf label main body module according to the first control signal; and the primary battery reverse protection circuit is configured to prevent the primary battery from being charged by the energy transducer or other energy sources. Compared with the prior art systems in which a primary battery is used alone or a DC power source is introduced for power supply, the electronic shelf label system of the present disclosure can provide a long-life and flexibly deployable multi-power supply system that integrates various clean energy sources with a primary battery for complementary power supply to an electronic shelf label.

In addition, the power supply management system for hybrid power supply provided in the embodiments of the present disclosure does not use complex or dedicated power supply management components or devices, but instead adopts a simple and reliable circuit design, to achieve the control and management of the electrical energy obtained after the micro-energy conversion and the primary battery, thereby greatly reducing the cost of the power supply system in the life cycle of the electronic shelf label; in the case where there are certain green energy sources such as light, mechanical vibration, thermal energy, radio waves, and the like, part or even all of the power sources for the electronic shelf label main body module may come from the green energy after conversion, and at this point, the primary battery serves as an optional accessory for the electronic shelf label main body module or for an accessory thereof; under certain operation frequencies of the electronic shelf label main body, it is even possible that all the energy demanded in the life cycle comes from green energy sources (note: in such a case, the primary battery may serve as an optional accessory for the electronic shelf label system); when the primary battery serves as a backup power source and the input of green energy is insufficient, a real-time seamless switch is performed to ensure the normal working and operation states of the electronic shelf label main body module; the primary battery is specifically equipped with a reverse charging protection function to eliminate the risk of being reverse charged; the battery life of the electronic shelf label main body module is greatly extended; by the harvesting and storage of green energy, together with the backup power supply system of the primary battery, the compatibility of the power supply system is extremely high, and the effective output capacity of the primary battery is greatly increased; the cost of achieving a long service life of the power supply system of the electronic shelf label is effectively reduced; the circuits or devices for green energy harvesting, storage and management are flexibly designed, and they may be integrated to the inside of the electronic shelf label, and may also be combined and deployed in the form of accessories; and the electronic shelf label is realized as a multi-power supply system in which a plurality types of clean energy are complementary to the primary battery, which is in line with the development direction of energy conservation and emission reduction

The persons skilled in the art shall understand that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product implemented on one or more computer-usable storage media (including but not limited to disk memory, CD-ROM, optical memory, etc.) which contain computer-usable program codes.

The present disclosure is described with reference to the flow charts and/or block diagrams of the method, device (system) and computer program product according to the embodiments of the present disclosure. It shall be understood that each process and/or box in the flow charts and/or block diagrams, as well as combinations of processes and/or boxes in the flow charts and/or block diagrams, can be implemented by computer program instructions. These computer program instructions can be provided to the processor of a general-purpose computer, a special-purpose computer, an embedded processor, or other programmable data processing devices to produce a machine such that the instructions executed by the processor of the computer or other programmable data processing devices generate a device for implementing the functions specified in one or more processes in the flow charts and/or one or more blocks in the block diagrams.

These computer program instructions can also be stored in a computer-readable memory capable of directing a computer or other programmable data processing device to operate in a specific manner, such that the instructions stored in the computer-readable memory produce an article including an instruction device, which implements the functions specified in one or more processes in the flow charts and/or one or more blocks in the block diagrams.

These computer program instructions can also be loaded onto a computer or other programmable data processing devices, enabling the execution of a series of operational steps on the computer or other programmable devices to produce computer-implemented processing, such that the instructions executed on the computer or other programmable devices provide steps for implementing the functions specified in one or more processes in the flow charts and/or one or more blocks in the block diagrams.

The above-mentioned specific embodiments further explain the object, technical solutions and advantageous effects of the present disclosure in detail. It should be understood that the above are merely the specific embodiments of the present disclosure, and are not used to limit the protection scope of the present disclosure. Any amendments, equivalent substitutions and improvements within the spirit and principle of the present disclosure should be included in the protection scope of the present disclosure.

## Claims

1. An electronic shelf label system, comprising an energy transducer, a transducer reverse protection circuit, a primary battery, a primary battery reverse protection circuit, and an electronic shelf label main body module,
wherein the energy transducer is respectively electrically connected to the electronic shelf label main body module and the primary battery via the transducer reverse protection circuit; the primary battery is electrically connected to the electronic shelf label main body module via the primary battery reverse protection circuit; the electronic shelf label main body module comprises a microcontroller unit (MCU);
the MCU is configured to send a first control signal to the primary battery reverse protection circuit according to an operation state of the electronic shelf label main body module, to control power supply from the primary battery;
the energy transducer is configured to convert at least one type of energy in the environment into electrical energy to supply power to the electronic shelf label main body module;
the transducer reverse protection circuit is configured to prevent current backflow from the electronic shelf label system to the energy transducer;
the primary battery is configured to supply power to the electronic shelf label main body module according to the first control signal; and
the primary battery reverse protection circuit is configured to prevent the primary battery from being charged by the energy transducer or other energy sources.

2. The system according to claim 1, further comprising: an energy intensity detection circuit, wherein the energy intensity detection circuit is electrically connected to the electronic shelf label main body module,
wherein the energy intensity detection circuit is configured to perform energy intensity detection on the at least one type of energy in the environment, and send a second control signal to the MCU according to a detection result; and
the MCU is further configured to send the first control signal to the primary battery reverse protection circuit according to the second control signal, to control power supply from the primary battery.

3. The system according to claim 1, wherein the operation state of the electronic shelf label main body module comprises: a sleep standby state, a scheduled operation status, and a wireless data communication state.

4. The system according to claim 1, further comprising: an energy storage device, wherein the energy storage device is electrically connected to the energy transducer via the transducer reverse protection circuit, and is electrically connected to the electronic shelf label main body module;
the energy storage device is configured to receive and store surplus energy, and to supply power to the electronic shelf label main body module, wherein the surplus energy is determined by power supplied by the energy transducer and power consumed by the electronic shelf label main body module.

5. The system according to claim 4, wherein the energy storage device is further electrically connected to the primary battery via the primary battery reverse protection circuit, and the primary battery is further configured to perform trickle charging on the energy storage device when energy stored in the energy storage device falls below a preset threshold.

6. The system according to claim 4, wherein the energy storage device comprises one or any combination of a capacitor, a battery capacitor, a secondary battery, and a super-capacitor.

7. The system according to claim 6, wherein if the energy storage device is the secondary battery, the energy storage device further comprises an external power supply interface, and the external power supply interface is configured to connect external electrical energy when the secondary battery is over-discharged, to activate the secondary battery.

8. The system according to claim 4, further comprising: a first voltage and current limiter, and a second voltage and current limiter,
wherein the transducer reverse protection circuit is respectively electrically connected to the energy storage device, the primary battery and the second voltage and current limiter via the first voltage and current limiter; the energy storage device is electrically connected to the electronic shelf label main body module via the second voltage and current limiter; and the first voltage and current limiter and the second voltage and current limiter are configured to perform current limiting or voltage conversion on the circuit.

9. The system according to claim 1, wherein the at least one type of energy in the environment includes one or any combination of light energy, wireless energy, electromagnetic energy, mechanical energy, and thermal energy.

10. The system according to claim 2, wherein the energy intensity detection circuit is specifically configured to:
perform energy intensity detection on the at least one type of energy in the environment, and if the detected energy intensity is lower than a preset threshold, send the second control signal to the MCU.

11. The system according to claim 1, wherein the energy transducer comprises one or any combination of a photoelectrical energy converter, a wireless energy converter, an electromagnetic energy converter, a mechanical energy converter, and a thermal energy converter.

12. The system according to claim 1, wherein the electronic shelf label main body module comprises a controller electrically connected to the transducer reverse protection circuit, and a display and a wireless communication module respectively electrically connected to the controller;
wherein the wireless communication module is configured to receive display information and send the display information to the controller; the controller is configured to generate a control instruction according to the display information and send the control instruction to the display; the display is configured to display a price according to the control instruction; and the wireless communication module comprises a near field communication (NFC) module and/or a radio frequency (RF) communication module.
